# EUROPEAN PATENT APPLICATION

(11) **EP 0 564 241 A2**
(43) Date of publication of application: **06.10.1993**
(21) Application number: 93302479.6
(22) Date of filing: 30.03.1993
(51) Int. Cl.: C08L 67/02, C08L 55/02, C08L 25/12

(54) **ABS polyester blends**

(30) Priority: 03.04.1992 US 863573
(71) Applicant: GENERAL ELECTRIC COMPANY, Schenectady, NY 12345 (US)
(72) Inventor: Sheu, Hrong-Roang, Somerville, New Jersey 08876 (US); Cox, Keith Edward, Mineral Wells, West Virginia 26150 (US)
(74) Representative: Pratt, Richard Wilson

(57) **Abstract**

The melt flow of ABS/Polyester blends comprising an ABS graft copolymer, a SAN copolymer and a thermoplastic polyester resin can be improved while retaining good impact strength properties by mismatching the ratios of styrene to acrylonitrile in the ABS graft copolymer and the SAN copolymer. The compositions are useful as molding resins.

## Description

The invention relates to ABS/polyester blends, and more particularly relates to ABS/polyester blends having improved melt flow while retaining good impact resistance properties.

Blends of ABS and thermoplastic polyesters are known.

JP 73 053,510 discloses blends of ABS/Polybutylene Terephthalate (50-99%/1-50%).

JP 76 025,261 discloses blends of ABS/Polybutylene Terephthalate (10-50%/90-50%) with the ABS being 40-80% Polybutadiene rubber.

US 4,117,034 discloses "Amorphous Polyester Graft Polymer Alloys" claiming blends of amorphous polyester and high rubber graft ABS.

US 4,292,233 discloses blends of Polybutylene Terephthalate/ABS-graft copolymer with the ABS containing more than 70% Polybutadiene rubber.

US 4,753,986 discloses blends of linear polyester/core-shell impact modifier comprising a rubbery core having a unimodal particle size distribution.

Blends of ABS and PBT have many good properties such as chemical resistance, high room temperature impact strength and good high temperature stability under low load conditions. There have been a number of proposals for improving the impact strength by addition of modifier rubbers or other polymers. It has been found that, however, they are not always completely satisfactory because the improvement in impact strength is sometimes accompanied by a significant deterioration in melt flow properties. In general, as impact strength goes up, melt flow goes down; and vice versa. Poor melt flow has* a significant effect on the quality of molded parts and on the productivity because of the longer time required to fill the mold and limitations on the size of the part.

It is desired to provide ABS/thermoplastic blends having improved melt flow while retaining good impact resistance properties.

### Summary of the Invention

This invention relates to thermoplastic compositions comprising a blend of an ABS graft copolymer preferably prepared by grafting styrene and acrylonitrile onto a substrate of a rubbery diene polymer; a styrene-acrylonitrile copolymer (SAN); and a thermoplastic polyester, preferably a polybutylene terephthalate (PBT).

The compositions exhibit improved melt flow and good impact strength.

### Detailed Description of the Invention

The present invention is based on the discovery that above compositions having improved melt flow and good impact strength could be achieved by creating a mismatch between the ratio of styrene(S) to acrylonitrile(AN) in the graft copolymer and the ratio of styrene to acrylonitrile in the SAN copolymer. Conventional wisdom typically has been that close matching of the S/AN ratios was required for ABS in order to obtain compatibility between the graft polymer and the SAN copolymer.

The linear thermoplastic polyesters in the resinous compositions of this invention usually comprise structural units of the formula: 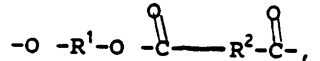
wherein each of R¹ and R² is a divalent aliphatic, alicyclic or aromatic radical containing about 2-10 carbon atoms. At least about 30 of said units are usually present, with at least about 50 being preferred. Such linear polyesters are typically prepared by the known reaction of dihydroxy compounds with dicarboxylic acids or functional derivatives thereof such as anhydrides, acid chlorides or lower alkyl (especially methyl) esters, preferably the esters.

The R¹ radicals may be one or more aliphatic, alicyclic or aromatic radicals, alicyclic radicals being known to those skilled in the art to be equivalent to aliphatic radicals for the purposes of the invention. They may be derived from such dihydroxy compounds as ethylene glycol, 1,4-butanediol (both of which are preferred), propylene glycol, 1,3-propanediol, 1,6-hexanediol, 1,10decanediol, 1,4-cyclohexanedimethanol, 2-butene-1,4-diol, resorcinol, hydroquinone and bisphenol A. They may also be radicals containing substituents which do not substantially alter the reactivity of the dihydroxy compound (e.g., alkoxy, halo, nitrile) or hetero atoms (e.g., oxygen or sulfur).

The R² radicals may be derived from such acids as succinic, adipic, maleic, isophthalic and terephthalic acids or similar substituted and hetero atom-containing acids. It usually contains about 6-10 carbon atoms.

Most often R¹ and R² are hydrocarbon radicals. Preferably, R¹ is aliphatic and especially saturated aliphatic and R² is aromatic. The polyester is most desirably a poly (alkylene terephthalate), particularly poly (ethylene terephthalate) or poly(1, 4-butylene terephthalate) (hereinafter sometimes simply "polyethylene terephthalate" and "polybutylene terephthalate", respectively) and especially the latter. Such polyesters are known in the art as illustrated by the following United States patents:

| | |
|---|---|
| 2,465,319 | 3,047,539 |
| 2,720,502 | 3,671,487 |
| 2,727,881 | 3,953,394 |
| 2,822,348 | 4,128,526 |

The polyesters preferably have number average molecular weights in the range of about 10,000-70,000, as determined by gel permeation chromatography or by intrinsic viscosity (IV) at 30°C, in a mixture of 60%(by weight) phenol and 40% 1,1,2,2,-tetrachloroethane.

The graft copolymers useful in the present invention have diene rubber substrate particles and a rigid polymer grafted thereon, and include ABS type graft copolymers. ABS type copolymers useful in the present invention have molecules which contain two or more polymeric parts of different compositions that are bonded chemically. The diene rubber substrate is preferably prepared by polymerizing a conjugated diene, such as 1,3-butadiene or a conjugated diene with a vinyl monomer copolymerizable therewith, such as styrene, to provide rubber substrate particles. After formation of the diene rubber substrate, at least one grafting monomer, and preferably two, are polymerized in the presence of the prepolymerized backbone to obtain the graft polymer. These resins are prepared by methods well known in the art.

The rubber substrate, as mentioned, is preferably a conjugated diene polymer such as polybutadiene, polyisoprene, or a copolymer, such as butadiene-styrene, butadiene-acrylonitrile, or the like.

The specific conjugated diene monomers normally utilized in preparing the backbone of the graft polymer are generically described by the following formula: 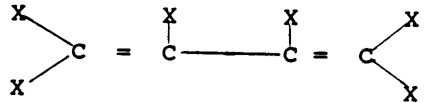
wherein X is selected from the group consisting of hydrogen, alkyl groups containing from one to five carbon atoms, chlorine or bromine. Examples of dienes that may be used are butadiene, isoprene, 1,3-heptadiene, methyl-1,3-pentadiene, 2,3-dimethyl-1,3-butadiene, 2-ethyl-1,3-pentadiene; 1,3- and 2,4-hexadienes, chloro and bromo substituted butadienes such as dichlorobutadiene, bromobutadiene, dibromobutadiene, mixtures thereof, and the like. A preferred conjugated diene is 1,3-butadiene.

One grafting monomer or group of grafting monomers that may be polymerized to form the graft polymer portion of the ABS polymer are monovinyl-aromatic hydrocarbons. The monovinylaromatic monomers utilized are generically described by the following formula: 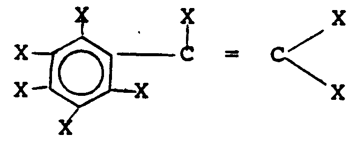
wherein X is as previously defined. Examples of the monovinylaromatic compounds and alkyl-, cycloalkyl-, aryl-, alkaryl-, aralkyl-, alkoxy-, aryloxy-, and other substituted vinylaromatic compounds include styrene, para methylstyrene, α-methylstyrene, 3,5-diethylstyrene, 4-n-propylstyrene, α-methyl vinyltoluene, α-chlorostyrene, α-bromostyrene, dichlorostyrene, dibromostyrene, tetra-chlorostyrene, mixtures thereof, and the like. The preferred monovinylaromatic hydrocarbons used are styrene and/or α-methylstyrene.

A second group of monomers that may be polymerized to form the-graft polymer portion of the ABS graft copolymer are acrylonitrile monomers such as acrylonitrile and substituted acrylonitrile.

The acrylonitrile monomers are described generically by the following formula: 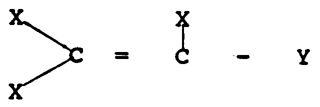
wherein X is as previously defined and Y is selected from the group consisting of cyano radicals. Examples of such monomers include acrylonitrile, ethacrylonitrile, methacrylonitrile, α-chloroarylonitrile, β-chloroacrylonitrile, α-bromoacrylonitrile, and β-bromoacrylonitrile. The preferred acrylonitrile monomer is acrylonitrile.

In the preparation of the ABS copolymer, the rubber substrate conjugated diolefin polymer or copolymer exemplified by a 1,3-butadiene polymer or copolymer is preferably present at a level of from 40 to 85 weight percent based on the total weight of the ABS graft copolymer composition. The monomers polymerized in the presence of the diene rubber substrate, to form the graft portion exemplified by styrene and acrylonitrile, preferably comprise from about 15 to about 60 percent by weight of the total graft copolymer composition.

The second group of grafting monomers, exemplified by acrylonitrile preferably comprise from about 10% to 24% by weight of the total graft portion. The monovinylaromatic hydrocarbon exemplified by styrene preferably comprises from 76% to 90% by weight of the total graft portion.

In preparing the graft copolymer, it is normal to have a certain percentage of the polymerizing monomers that are not grafted on the rubber substrate combine with each other and occur as free copolymer. If styrene is utilized as one of the grafting monomers and acrylonitrile as the second grafting monomer, a certain portion of the composition will copolymerize as free styrene-acrylonitrile copolymer. When an ABS graft copolymer composition is referred to in this disclosure, it is the actual graft copolymer being referred to which is preferably essentially free of any resultant free copolymer that results from the manufacture of the ABS graft copolymer, preferably containing less than 5 percent by weight free copolyer based on the total weight of the ABS graft copolymer; so that the ABS/polyester blend composition contains an ABS graft copolymer and a SAN copolymer which have mismatched S to AN ratios.

The SAN copolymer is prepared separately from the graft copolymer so that the styrene to acrylonitrile ratios in the graft copolymer are mismatched with the styrene to acrylonitrile ratios in the SAN copolymer. Preferably the styrene to acrylonitrile weight ratio in the graft portion of the ABS graft copolymer is between 90:10 and 76:24, more preferably between 85:15 and 80:20, and most preferably 82:18. Preferably the styrene to acrylonitrile weight ratio in the SAN copolymer is between 75:25 and 60:40, more preferably from 72:28 and 65:35, and most preferably 72:28. Preferably the weight percent of styrene in the ABS graft copolymer based on the total weight of styrene and acrylonitrile in the graft portion of the graft polymer differs by at least 5 percentage points from the weight percent of styrene in the SAN copolymer based on the total weight of styrene and acrylonitrile in the SAN copolymer.

The thermoplastic compositions preferably comprise the thermoplastic polyester resin at a level of from between 15 to 80 weight percent based on the total weight of the composition, more preferably from 30 to 75 weight percent thereof, and most preferably from 35 to 60 weight percent thereof; preferably the ABS graft copolymer is present at a level of from between 15 to 75 weight percent based on the total weight of the composition, more preferably from 20 to 60 weight percent ABS graft copolymer, and most preferably from 20 to 40 weight percent ABS graft copolymer; and preferably comprises styrene-acrylonitrile rigid copolymer at a level of from 5 to 50 weight percent based on the total weight of the composition, more preferably from 10 to 40 weight percent thereof, and most preferably from 15 to 25 weight percent thereof.

A diepoxide may be employed in the blends. Use of diepoxides in ABS graft polymer/polyalkyleneterephthalate blends is taught in Jalbert etal U.S. Pat 5001178 which is incorporated herein by reference.

Various diepoxides which are useful in the present invention are described in U.S. Pat No. 2,890,209. The diepoxides may be prepared by the catalytic esterification of 3,4-epoxycyclohexylmethyl 3,4-epoxycyclohexanecarboxylates and have the general formula 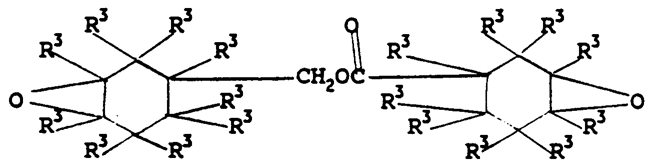
wherein each R³ is independently representing members-selected from the group consisting of hydrogen and alkyl groups. More particularly each R³ independently represents members selected from the group consisting of hydrogen and lower alkyl groups containing from one to four carbon atoms. When any R³ represents an alkyl group and particularly a lower alkyl group, a preferred class of diepoxides are those wherein the total number of carbon atoms contained said alkyl groups does not exceed twelve. A particularly preferred class of compounds represented by the general formula above are those where each R³ represents a member selected from the group consisting of hydrogen and methyl groups. Polymers and particularly the homopolymers made from diepoxide monomers and mixtures thereof having not more than 3 alkyl substituents per carbocyclic ring are preferred.

The diepoxides represented by the general formula above can be conveniently prepared by reacting a selected 3-cyclohexenylmethyl 3-cyclohexencarboxylate with peracetic acid. The 3-cyclohexenylmethyl 3-cyclohexenecarboxylates, in turn, are readily prepared by reacting a selected 3-cyclohexenecarboxaldehyde in the presence of an aluminum alkoxide catalyst dissolved in an inert solvent, such as benzene, at a temperature in the range of 0°C. to 110°C.

The compositions of the invention preferably contain the diepoxide constituent in an amount sufficient to enhance the high temperature processing stability of the blends as measured by the Izod impact strength. In preferred embodiments, the compositions contain from about 0.01 to about 5 weight percent of the diepoxide, and from about 20 to about 99.9 weight percent of the combined polyalkylene terephthalate, ABS graft copolymer and SAN copolymer based on the total weight of the composition.

### EXAMPLES:

1. In the examples below, all the designation of "pbw" denotes "parts by weights". Following blend components were used in the examples:
(A) ABS-graft copolymer All the ABS-graft polymers were prepared by grafting 50 pbw of styrene and acrylonitrile on to 50 pbw of a polybutadiene latex having average particle diameter in the range of 0.3 to 0.4 micrometers (µm). Graft polymerizations were carried out by batch or semi-batch process and the ratio of S to AN was varied from 70/30 to 82/18.
   ABS-B 70/30: An ABS-graft polymer prepared by batch emulsion polymerization of 33 pbw of styrene and 15 pbw of acrylonitrile on to 50 pbw of polybutadiene latex, the ratio of S/AN in this graft polymer being 70/30.
   ABS-B 82/18: An ABS-graft polymer prepared by batch emulsion polymerization of 41 pbw of styrene and 9 pbw of acrylonitrile on to 50 pbw of polybutadiene latex, the ratio of S/AN in this graft polymer being 82/18.
   ABS-SB 75/25: An ABS-graft polymer prepared by semi-batch emulsion polymerization of 37.5 pbw of styrene and 12.5 pbw of acrylonitrile on to 50 pbw of polybutadiene latex, the ratio of S/AN in this graft polymer being 75/25.
   ABS-SB 81/18: An ABS-graft polymer prepared by semi-batch emulsion polymerization of 41 pbw of styrene and 9 pbw of acrylonitrile on to 50 pbw of polybutadiene latex, the ratio of S/AN in this graft polymer being 82/18.
B. Styrene-acrylonitrile copolymer SAN 72/28: A styrene-acrylonitrile copolymerprepared by bulk polymerization, the ratio of S/AN being 72/28 and the weight average molecular weight being 110,000 g/mole.
C. Polybutylene terephthalate PBT: A polybutylene terephthalate obtained from General Electric Company as VALOX® 315.

2. ABS/PBT blends were prepared in the proportions described in Table I by melt mixing in a twin screw extruder at 500°F. The resulting polymer blend strands were quenched and pelletized, and the pellets injection molded at 500°F into test specimens. The Izod impact and melt viscosity properties of the test specimens are described in Table I. The Izod impact strength was measured in accordance with Test ASTM D256A and the melt viscosity data generated using a Kayness capillary rheometer at 500°F.

**TABLE 1**

| | A | 1 | B | 2 |
|---|---|---|---|---|
| PBT | 45 | 45 | 45 | 45 |
| ABS-SB 75/25 | 33 | -- | 30 | -- |
| ABS-SB 82/18 | -- | 33 | -- | 30 |
| SAN 72/28 | 22 | 22 | 25 | 25 |

| Notched Izod | | | | |
|---|---|---|---|---|
| 1/8'' (ft-lb/in) | | | | |
| 73°F | 9.9 | 9.0 | 7.2 | 7.0 |
| 0°F | 2.2 | 2.4 | 2.2 | 2.4 |

| Melt Viscosity | | | | |
|---|---|---|---|---|
| 500°F (poise) | | | | |
| 500 sec⁻¹ | 3463 | 2888 | 2946 | 2810 |
| 1000 sec⁻¹ | 2277 | 1939 | 2008 | 1879 |

A thermal antioxidant stabilizer was present, Bis (2,4-di-t-butylphenyl) pentaerythritol diphosphite, manufactured by General Electric Company and sold under the trademark Ultranox^{R}626 was used at a level of 0.5 weight percent in examples A, 1, B and 2. Note that examples 1 and 2 of the present invention exhibit lower viscosity than their respective comparative examplex A and B.
3. ABS-PBT blends were prepared in the proportions described in Table II by melt mixing in a twin screw extruder at 500°F. The resulting polymer blend strands were quenched and pelletized, and the pellets injection molded at 500°F into test specimens. The Izod impact and melt viscosity properties of the test specimens are described in Table II. The Izod impact strength was measured in accordance with Test ASTM D256A and the melt viscosity data generated using a Kayness capillary rheometer at 500°F.

**Table II**

| | C | 3 | D | 4 | E | 5 |
|---|---|---|---|---|---|---|
| PBT | 45 | 45 | 45 | 45 | 45 | 45 |
| ABS-B 70/30 | 30 | -- | 34 | -- | 38 | -- |
| ABS-B 82/18 | -- | 30 | -- | 34 | -- | 38 |
| SAN 72/28 | 25 | 25 | 21 | 21 | 17 | 17 |
| ERL-4221 | 0.25 | 0.25 | 0.25 | 0.25 | 0.25 | 0.25 |
| Notched Izod | | | | | | |
| 1/8'' (ft-lb/in) | | | | | | |
| 73°F | 7.5 | 7.6 | 11.2 | 14.5 | 15.4 | 15.2 |
| Melt Viscosity | | | | | | |
| 500°F (poise) | | | | | | |
| 100 Sec¹ | 12338 | 10248 | 13495 | 11009 | 15838 | 12993 |
| 500 Sec¹ | 4634 | 4050 | 5011 | 4330 | 5815 | 4873 |
| 1000 Sec¹ | 3040 | 2715 | 3271 | 2897 | 3777 | 3161 |

A thermal antioxidant stabilizer, Bis (2,4-di-t-butylphenyl) pentaerythritol diphosphite, manufactured by General Electric Company and sold under the trademark Ultranox^{R}626 was used at a level of 0.25 weight percent in examples.

ERL-4221: a thermal stabilizer, diepoxy compound, manufactured by Union Carbide Company.

From the foregoing examples, it should be recognized that the compositions of the present invention can improve the melt flow of ABS and polybutylene terephthalate containing blends and have good impact strength. This was achieved by producing a mismatch between the ratio of S/AN in the ABS-graft polymer and the ratio of S/AN in the SAN copolymer. Note that examples 3,4 and 5 of the present invention exhibit reduced viscosities over their respective comparative examples C, D and E.

## Claims

1. A thermoplastic composition comprising:
(a) a thermoplastic polyester resin;
(b) a graft copolymer comprising
(i) a rubbery core and
(ii) a styrene-acrylonitrile copolymer graft portion grafted to said rubbery core; and
(c) a free styrene-acrylonitrile copolymer, wherein the ratios of styrene to acrylonitrile in said graft copolymer and said free styrene-acrylonitrile copolymer are sufficiently mismatched to improve the melt flow of said composition.

2. The composition as claimed in claim 1, wherein said thermoplastic polyester is a polybutylene terephthalate resin.

3. The composition as claimed in claim 2 wherein the ratio of styrene to acrylonitrile in the graft portion of said graft copolymer is selected from between 90:10 and 76:24.

4. The composition as claimed in claim 3, wherein the ratio of styrene to acrylonitrile in said free styrene-acrylonitrile copolymer is selected from between 75:25 and 60:40.

5. The composition of claim 2 wherein the polybutylene terephthalate resin is present at a level of from 15 to 75 weight percent based on the total weight of the composition; and said ABS graft copolymer being present at a level of from 15 to 75 weight percent based on the total weight of the composition.

6. A thermoplastic composition comprising:
(a) a polybutylene terephathalate resin present at a level of from 15 to 75 percent by weight based on the total weight of the composition;
(b) an ABS graft copolymer present at a level of from between 15 and 75 weight percent based on the total weight of the resin, said ABS graft copolymer having a rubber core and a styrene-acrylonitrile graft, said styrene-acrylonitrile graft having a styrene to acrylonitrile weight ratio of between 90:10 to 76:24;
(c) a free SAN copolymer derived from styrene and acrylonitrile wherein the weight ratio of styrene to acrylonitrile in said SAN copolymer is from between 75:25 and 60:40.

7. A thermoplastic composition comprising:
(a) from 15 to 75 weight percent polyalkylene terephthalate resin based on the total weight of the composition;
(b) from 15 to 75 weight percent of an ABS graft polymer based on the total weight of the composition, said graft polymer being formed by grafting a mixture of a monovinyl aromatic monomer and an ethylenically unsaturated nitrile onto a diene rubber substrate having a particle size of between 0.04 nm and 2.0 nm, said monovinyl aromatic monomer being present at a level of from 20 to 99 weight percent based on the total weight of the mixture, and said ethylenically unsaturated nitrile being present at a level of from 1 to 80 weight percent based on the total weight of the mixture, said diene rubber substrate being present at a level of from 85 to 15 weight percent based on the total weight of the ABS graft polymer, the weight ratio of said monovinyl aromatic monomer to said unsaturated nitrile being from between 90:10 and 76:24; and
(c) a copolymer formed from a monovinyl aromatic monomer ethylenically unsaturated nitrile, said monovinyl aromatic monomer being present in said copolymer at level of from between 60 to 75 weight percent based on the total weight of the copolymer, and said ethylenically unsaturated nitrile being present in said copolymer at a level of from between 25 to 40 weight percent based on the total weight of the copolymer.

8. The composition of claim 7 wherein said polyalkylene terephthalate resin is polybutylene terephthalate resin.

9. The composition of claim 7 wherein said monovinyl aromatic monomer in said graft polymer is styrene, and said monovinyl aromatic monomer in said copolymer is styrene.

10. The composition of claim 7 wherein said ethylenically unsaturated nitrile in said graft polymer is acrylonitrile and said ethylenically unsaturated nitrile in said copolymer is acrylonitrile.

11. The composition of claim 7 wherein the weight percent difference of the weight percent of ethylenically unsaturated nitrile the ABS graft copolymer based on the total weight of styrene and acrylonitrile in said ABS graft copolymer and the weight percent of ethylenically unsaturated nitrile in the SAN copolymer based on the total weight of styrene and acrylonitrile of SAN copolymer is selected from between 5 and 18 weight percent.
